Europäisches Patentamt

European Patent Office

Office européen des brevets

(11) Veröffentlichungsnummer: **0 043 148**
**A1**

(12) **EUROPÄISCHE PATENTANMELDUNG**

(21) Anmeldenummer: **81200595.7**

(22) Anmeldetag: **02.06.81**

(51) Int. Cl.³: **C 02 F 1/64**
**C 02 F 1/74**

(30) Priorität: **27.06.80 BE 258627**

(43) Veröffentlichungstag der Anmeldung:
**06.01.82 Patentblatt 82/1**

(84) Benannte Vertragsstaaten:
**DE FR LU NL**

(71) Anmelder: **Hanssens, Joseph**
**Vaucampslaan 135**
**B-1511 Huizingen(BE)**

(72) Erfinder: **Hanssens, Joseph**
**Vaucampslaan 135**
**B-1511 Huizingen(BE)**

(74) Vertreter: **Donné, Eddy**
**M.F.J.Bockstael Arenbergstraat 13**
**B-2000 Anvers(BE)**

(54) **Wasserenteisenungsanlage.**

(57) Wasserenteisenungsanlage der im wesentlichen aus der Kombination eines Filterbehälters (1) und eines Vorratbehälters (2) mit dem folgenden Zubehör bestehenden Art: oben im Filterbehälter (1) ein Einlaßraum (8) für das zu enteisende Wasser; in diesem Einlaßraum (8) angeordnete Mittel (14), deren Aufgabe es ist, das zugeführte eisenhaltige Wasser mit einer großen Sauerstoffmenge in Berührung zu bringen; ein im Vorratbehälter (2) angeordneter Wasserstandanzeiger (22, 24) für das Steuern der Zufuhrpumpe für das zu enteisende Wasser; und eine unter den beiden vorgenannten Behältern (1,2) angeordnete, in der Nähe des Filterbehälters (1) verlängerte und mit der Abfuhrleitung einer mit ihrer Saugseite an den vorgenannten Vorratbehälter (2) angeschlossenen Pumpe (32) verbundene Verbindungsleitung (26), wobei in dieser verlängerten Leitung (26) ein zweites Ventil (29) angeordnet ist.

EP 0 043 148 A1

- 1 -

"Wasserenteisenungsanlage".

Die vorliegende Erfindung bezieht sich auf eine Wasserenteisenungsanlage und insbesondere auf eine Anlage zur Enteisenung stark eisenhaltigen Wassers, wie dies meistens bei Brunnenwasser der Fall ist. Die der Anwendung eisenhaltigen Wassers anhaftenden Hauptnachteile sind einerseits die durch die Ablagerung eisenhaltiger Verbindungen verursachte Verstopfung der betreffenden Wasserleitungen und anderseits die Erzeugung brauner Flecken auf Sanitärgeräten.

Folglich wird aus diesen und weiteren Gründen erfindungsgemäss die Anwendung einer sich nicht nur für eine zweckmässige Enteisenung stark eisenhaltigen Wassers eignenden, sondern zugleich eine Höchstmögliche Betriebssicherheit gewährleistenden Wasserenteisenungsanlage vorgeschlagen.

Die erfindungsgemässe Wasserenteisenungsanlage besteht zu diesem Zweck im wesentlichen aus der Kombination zweier Behälter, nämlich aus einem Filterbehälter und einem Vorratbehälter mit dem folgenden Zubehör : im Filterbehälter ein Einlassraum für das zu enteisenende Wasser; in diesem Einlassraum angeordnete Mittel, deren Aufgabe es ist das zugeführte eisenhaltige Wasser mit einer grossen Sauerstoffmenge in Berührung zu bringen; ein im Vorratbehälter angeordneter Wasserstandanzeiger für das Steuern der Zufuhrpumpe für das zu enteisenende Wasser; und eine unter den beiden Behältern angeordnete, ein Ventil enthaltende, in der Nähe des Filterbehälters verlängerte und mit der Abfuhrleitung einer mit ihrer Saugseite an den vorgenannten Vorratbehälter angeschlossenen Pumpe verbundene Verbindungsleitung, wobei in dieser verlängerten Leitung ein zweites Ventil angeordnet ist.

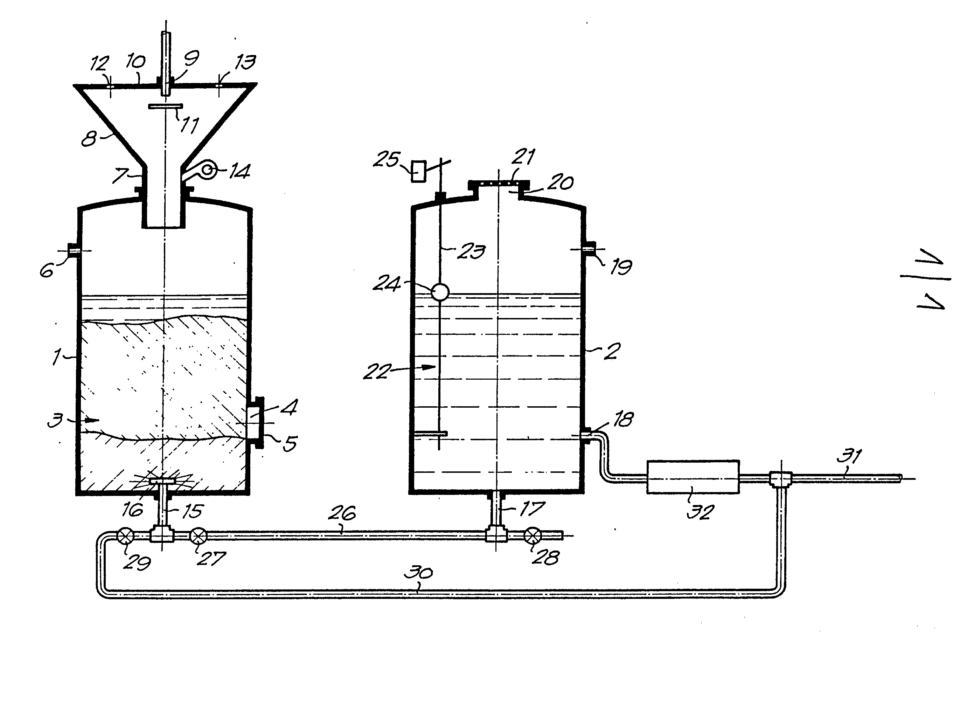

Die Kennzeichen und Vorteile der erfindungsgemässen Wasserenteisenungsanlage treten deutlicher aus der nachfolgenden eingehenden Beschreibung einer Vorzugsausführungsweise zutage. Diese ohne irgendeine einschränkende Absicht gegebene Beschreibung findet an Hand der beiliegende Zeichnung statt, wo die einzige Abbildung die betreffende erfindungsgemässe Wasserenteisenungsanlage im Schnitt wiedergibt.

Wie aus der beiliegenden Abbildung ersichtlich ist, besteht die erfindungsgemässe Wasserenteisenungsanlage im wesentlichen aus zwei Behältern 1 und 2, wovon der erste den eigentlichen Filterbehälter darstellt und der zweite sozusagen ein Vorratbehälter für enteisentes Wasser ist.

Im eine beliebige, vorzugsweise zylindrische Form aufweisenden Filterbehälter 1 ist eine aus einer oder mehreren Kiesschichten oder einem anderen geeigneten Filtermaterial bestehende und sich zur Abscheidung oxidierten Eisens aus dem Wasser eignende Filtermasse geeigneter Höhe angeordnet. An der Stelle dieser Filtermasse ist vorzugsweise in der Wand des Behälters 1 eine mit einem Deckel 5 abgeschlossene und gegebenenfalls die Filtermasse zugänglich machende Öffnung 4 vorgesehen, welche sogar die Abmessungen eines Mannlochs haben kann um den Zutritt zum Behälter zu ermöglichen.

Auf geeigneter Höhe ist im Behälter 1 eine Öffnung 6 vorgesehen, welche vorzugsweise mit der Abwasserkanalisation verbunden ist und den Überlauf des Behälters bildet.

An seiner Oberseite ist der Behälter 1 mit einem Anschlussstutzen 7 versehen, der den unteren Teil einer trichterförmigen Kammer 8 bildet, worin ein Axialanschlussstutzen 9 angeordnet ist, der auf nicht dargestellte Weise mit einer Pumpe für die Wasserzufuhr nach dem Behälter 1 verbunden ist, wobei unter diesem Anschlussstutzen 9 in geeigneter Entfernung von der Oberseite 10 der trichterförmigen oder konischen Kammer 8 ein Blech oder Reflektor 11 angeordnet ist, das bzw. der durch geeignete, nicht dargestellte Arme beispielsweise an den Wänden der Kammer 8 befestigt ist, während in der vorgenannten Oberseite 10 überdies eine oder mehrere Löcher (im vorliegenden Fall zwei Löcher 12 und 13) vorgesehen sind.

Im Teil 7 der vorgenannten Kammer 7-8 ist eine vorzugsweise tangential montierte Blasvorrichtung 14 vorgesehen.

An seiner Unterseite ist der Behälter 1 schliesslich mit einer Abfuhrleitung 15 versehen, deren freies Ende in die vorgenannte Filtermasse 3 eintaucht und durch ein Filter, ein Drahtgeflecht oder eine andere geeignete Vorrichtung 16 zwecks Verhinderung des Überganges des Filtermaterials in die Leitung 15 abgeschirmt ist.

Der Behälter 2 ist ganz als Speicherbehälter ausgeführt und dazu an seiner Unterseite mit einer Zufuhrleitung 17 ausgestattet, während in seiner Wand einerseits eine Abfuhrleitung und anderseits ein Überlauf 19 vorgesehen sind, wobei letzterer, wie der Überlauf 6 des Behälters 1, ebenfalls an die Abwasserkanalisation angeschlossen wird.

An seiner Oberseite weist der Behälter 2 eine Öffnung 20 auf, die normalerweise durch eine mit geeigneten Entlüftungslöchern versehene Platte 21 abgeschlossen ist.

Im Behälter 2 befindet sich ausserdem eine Schwimmervorrichtung 22, die im wesentlichen aus einer mit einem Schwimmer 24 versehene, mit einem Schwimmerschalter 25 in Verbindung stehenden Stange 23 besteht. Eine derartige Schwimmervorrichtung kann selbstverständlich durch einen Wasserstandanzeiger beliebiger geeigneter Art ersetzt werden.

Die vorgenannten Leitungen 15 und 17 der Behälter 1 und 2
sind erfindungsgemäss mittels einer Leitung 26 miteinander
verbunden, in der ein Magnetventil 27 angeordnet ist, wobei
diese Leitung 26 durchläuft, sowohl an der Leitung 15 als
auch an der Leitung 17 vorbei, und weiter wie letztere mit
einem einfachen Sperrventil 28 versehen ist, während der
weiter als die Leitung 15 durchlaufende Teil mit einem Magnetventil 29 ausgestattet ist, das seinerseits mit einer
Leitung 30 verbunden ist, die in die Abfuhrleitung 31 einer
anderseits mit der vorgenannten Austrittöffnung 18 des Behälters 1 verbundenen Pumpe 32 ausmündet.

Die Wirkungsweise der in den vorhergehenden Zeilen beschriebenen Wasserenteisenungsanlage lässt sich folgendermassen
beschreiben.

Das zu behandelnde Wasser wird der Wasserenteisenungsanlage
durch den Anschlussstutzen 9 zugeführt, wobei das Wasser auf
das Blech 11 aufprallt und zerplatzt, demzufolge es beim
Herunterfallen in den Behälter 1 ein grösseres Volumen aufweist, und dieses gelöste Eisenverbindungen enthaltendes
Wasser der Einwirkung einer Blasvorrichtung 14 ausgesetzt
ist, deren Aufgabe es ist das derart verteilte Wasser mit
einer grossen Sauerstoffmenge in Berührung zu bringen zwecks
Umwandlung der im Wasser gelösten Eisenverbindungen in unlöslichen Eisenrost.

Das derart behandelte Wasser fliesst durch die Filtermasse
3 hindurch und lässt dabei den unlöslichen Eisenrost in
der Form einer braunen Schicht auf bzw. in dieser Filtermasse zurück, wonach es automatisch in den Behälter 2 gelangt.

Die beiden Ventile 28 und 29 sind hierbei natürlich geschlossen, während das Ventil 27 geöffnet ist, derart dass die beiden Behälter 1 und 2 sich als kommunizierende Gefässe verhalten.

Darauf steigt das Wasser im Behälter 2, demzufolge der Schwimmer 24 sich ebenfalls aufwärts bewegt, und zwar solange bis der Schalter 25 betätigt wird, die das Wasser in den Behälter 1 einführende Pumpe ausschaltet.

Durch geeignete Einschaltung der Pumpe 32 wird das enteisente Wasser aus dem Behälter 2 durch die Leitung 31 nach der Verbrauchstelle gepumpt. Während des Verbrauches sinkt der Schwimmer 24, demzufolge der Schalter 25 umschaltet und erneut Wasser nach dem Behälter 1 gepumpt wird.

Während das Sperrventil 28 dazu dient um die Gesamtanlage aus irgendeinem Grund leerlaufen zu lassen, sind die beiden Ventile 27 und 29 geeigneterweise mit einer nicht dargestellten, an und für sich bekannten Steuervorrichtung verbunden, welche ihrerseits durch einen Zeitmechanismus gesteuert wird, die programmgemäss dafür sorgt, dass in bestimmten Zeitpunkten, beispielsweise alle 24 Stunden, das Ventil 27 geschlossen und das Ventil 29 geöffnet wird, so dass unter dem Einfluss der ebenfalls in diesem Augenblick eingeschalteten Pumpe 32 reines enteisentes Wasser aus dem Behälter 2 durch die Leitungen 30 und 15 nach dem Behälter 1 und also durch die Filtermasse 3 hindurch gepumpt wird, derart dass regelmässig automatische Reinigung der Filtermasse 3 stattfindet, indem das durch die Filtermasse 3 fliessende enteisente Wasser den dort abgelagerten Eisenrost teilweise oder vollständig mitschleppt und durch die Überlauföffnung 6 aus dem Behälter 1 entfernt.

Es ergibt sich also eine besonders zweckmässige, stets eine genügende Menge enteisenten Wassers vorrätig haltende Wasserenteisenungsanlage, deren Filtermasse regelmässig mit enteisentem Wasser gereinigt wird.

Die vorliegende Erfindung beschränkt sich selbstverständlich keineswegs auf die in den vorhergehenden Zeilen beispielsmässig beschriebene und durch die beiliegenden Zeichnung erläuterte Ausführungsweise, sondern bezieht sich ebenfalls auf sämtliche Abänderungen, Ergänzungen und Anpassungen derselben, vorausgesetzt natürlich, dass der Erfindungsrahmen nicht überschritten wird.

**0043148**

Patentansprüche.

1.- Wasserenteisenungsanlage, dadurch gekennzeichnet, dass sie im wesentlichen aus der Kombination zweier Behälter, und zwar aus einem Filterbehälter (1) und einem Vorratbehälter (2) mit dem folgenden Zubehör besteht : oben im Filterbehälter (1) ein Einlassraum (8) für das zu enteisende Wasser; in diesem Einlassraum (8) angeordnete Mittel, deren Aufgabe es ist das zugeführte eisenhaltige Wasser mit einer grossen Sauerstoffmenge in Berührung zu bringen; ein im Vorratbehälter (2) angeordneter Wasserstandanzeiger für das Steuern der Zufuhrpumpe für das zu enteisende Wasser; und eine unter den beiden vorgenannten Behältern (1,2) angeordnete, mit einem Ventil (27) ausgestattete, in der Nähe des Filterbehälters (1) verlängerte und mit der Abfuhrleitung (31) einer mit ihrer Saugseite an den vorgenannten Vorratbehälter (2) angeschlossenen Pumpe (32) verbundene Verbindungsleitung (26), wobei in dieser verlängerten Leitung (26) ein zweites Ventil (29) angeordnet ist.

2.- Wasserenteisenungsanlage gemäss dem Anspruch 1, dadurch gekennzeichnet, dass unten im Filterbehälter (1) eine Filtermasse (3) angeordnet ist, in die das durch ein Drahtgeflecht, ein Filter oder eine andere geeignete Vorrichtung (16) abgeschirmte Ende einer Wasserabfuhrleitung (15) eintaucht, und dieser Filterbehälter (1) oben einen konischen Einlassraum (8) für das zu enteisende Wasser und unter diesem Einlassraum (8) eine Überlauföffnung (6) aufweist.

3.- Wasserenteisenungsanlage gemäss dem Anspruch 2, dadurch gekennzeichnet, dass der Oberteil des vorgenannten Einlassraumes (8) abgeschlossen ist und dort mit einem Zufuhrstutzen (9) für das zu enteisende Wasser, sowie mit einem oder mehreren Entlüftungslöchern (12,13) versehen ist.

4.- Wasserenteisenungsanlage gemäss irgendeinem der vorhergehenden Ansprüche, dadurch gekennzeichnet, dass unter dem vorgenannten Wasserzufuhrstutzen (9) ein Blech oder Reflektor (11) angeordnet ist.

5.- Wasserenteisenungsanlage gemäss irgendeinem der vorhergehenden Ansprüche, dadurch gekennzeichnet, dass unten im vorgenannten Einlassraum (8) zwischen dem vorgenannten Blech oder Reflektor (11) einerseits und dem eigentlichen Filterbehälter anderseits eine Blassvorrichtung (14) für die Zufuhr von Sauerstoff in den vorgenannten Einlassraum bzw. Filterbehälter montiert ist.

6.- Wasserenteisenungsanlage gemäss irgendeinem der vorhergehenden Ansprüche, dadurch gekennzeichnet, dass der im Vorratbehälter (2) angeordnete Wasserstandanzeiger einen Schalter (25) betätigt, der seinerseits die Zufuhrpumpe des zu enteisenden Wassers für den Filterbehälter (1) steuert.

7.- Wasserenteisenungsanlage gemäss irgendeinem der vorhergehenden Ansprüche, dadurch gekennzeichnet, dass der Oberteil des Vorratbehälters (2) mit einer mit einem durchlöcherten Blech (21) abgeschlossenen Öffnung (20) versehen ist.

8.- Wasserenteisenungsanlage gemäss irgendeinem der vorhergehenden Ansprüche, dadurch gekennzeichnet, dass der vorgenannte Vorratbehälter (2) einerseits auf geeigneter Höhe mit einer Überlauföffnung (19) und anderseits mit einer Abfuhrleitung (18) versehen ist, welche an der Saugseite einer Pumpe (32) angeschlossen ist, deren Abfuhrseite mit einer Leitung für die Versorgung der Verbrauchstellen mit enteisentem Wasser verbunden ist.

9.- Wasserenteisenungsanlage gemäss irgendeinem der vorhergehenden Ansprüche, dadurch gekennzeichnet, dass mit der Zufuhrleitung (26) des enteisenten Wassers nach dem Vorratbehälter (2) eine normalerweise durch ein Sperrventil (29) abgeschlossene Leitung (30) verbunden ist.

10.- Wasserenteisenungsanlage gemäss irgendeinem der vorhergehenden Ansprüche, dadurch gekennzeichnet, dass die vorgenannten Ventile (27,28,29) Magnetventile sind, welche an einer durch einen Zeitmechanismus gesteuerten Steuervorrichtung gekuppelt sind.

1/1

0043148

# 0043148

Nummer der Anmeldung

**EUROPÄISCHER RECHERCHENBERICHT**

Europäisches Patentamt

EP 81200595.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 924 858 (LINN)<br><br>+ Seite 2, Zeilen 70-77 +<br><br>-- | 1,5 |
| | DE - C - 125 395 (OESTEN)<br><br>+ Seite 3, linke Spalte, letzter Absatz; rechte Spalte, erster Absatz +<br><br>---- | 1 |

**KLASSIFIKATION DER ANMELDUNG (Int Cl³)**

C 02 F 1/64
C 02 F 1/74

**RECHERCHIERTE SACHGEBIETE (Int. Cl.³)**

C 02 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 01-09-1981 | WILFLINGER |

EPA form 1503.1 06.78